# EUROPÄISCHE PATENTSCHRIFT

(11) **EP 1 216 578 B1**
(45) Veröffentlichungstag und Bekanntmachung des Hinweises auf die Patenterteilung: **12.01.2005**
(21) Anmeldenummer: 99947442.2
(22) Anmeldetag: 01.10.1999
(51) Int. Cl.: H04N 13/02, H04N 13/04, G02B 27/22

(54) **VERFAHREN ZUR ERZEUGUNG EINER DREIDIMENSIONAL WAHRNEHMBAREN FILMSEQUENZ AUS EINEM FILM**
METHOD FOR GENERATING A THREE-DIMENSIONALLY VIEWABLE FILM SEQUENCE FROM A FILM
PROCEDE DE CREATION D'UNE SEQUENCE DE FILM TRIDIMENSIONNELLE A PARTIR D'UN FILM

(43) Veröffentlichungstag der Anmeldung: 26.06.2002
(73) Patentinhaber: Telcast International GmbH & Co. KG, 80805 München (DE)
(72) Erfinder: WIEDENMANN, Henrike, Dorothea, D-81371 München (DE)
(74) Vertreter: Manitz, Finsterwald & Partner GbR
(86) Internationale Anmeldenummer: PCT/EP1999/007268
(87) Internationale Veröffentlichungsnummer: WO 2001/026386

(56) Entgegenhaltungen:
- US-A- 4 131 342
- US-A- 5 650 815
- SAND R.: 'Dreidimensionales Fernsehen mit NUOPTIX 3D', Bd. 3, M{rz 1991, FKTG, HEIDELBERG Seiten 145 - 146, XP000224243

## Beschreibung

Die Erfindung betrifft ein Verfahren zur Erzeugung einer dreidimensional wahrnehmbaren Filmsequenz (3D-Filmsequenz) aus einem Film, der aus mehreren unmittelbar aufeinander folgenden Einzelbildern besteht und zur zweidimensionalen Wahrnehmung vorgesehen ist.

Aus der US-A-5 650 815 sind ein Verfahren und eine Brille zur Erzeugung einer Tiefenwahrnehmung bei Betrachtung einer Projektion bewegter Bilder bekannt. Zu diesem Zweck verändert oder verzerrt die Brille das Bild, wobei die für die beiden Augen des Betrachters vorgesehenen Linsen unterschiedliche Abbildungseigenschaften besitzen.

Die US-A-4,131,342 beschreibt die Erzeugung eines Zeichentrickfilms, der aufgrund des so genannten Pulfrich-Effekts und des so genannten chromostereoskopischen Effekts stereoskopisch wahrnehmbar ist. Hierfür wird während des Aufzeichnens des Zeichentrickfilms ein Vordergrund in horizontaler Richtung relativ zu einem Hintergrund bewegt.

Aus der Veröffentlichung R. Sand: Dreidimensionales Fernsehen mit "Nuoptix 3D", in: FKT 45 (1991), Seiten 145 bis 146 ist die dreidimensionale Wahrnehmbarkeit einer von einem herkömmlichen Fernsehempfänger gezeigten Szene aufgrund des so genannten Pulfrich-Effekts bekannt.

Dreidimensional wahrnehmbare Filmsequenzen, die im Zusammenhang mit der Erfindung als 3D-Filmsequenzen bezeichnet werden, werden üblicherweise mit stereoskopischen oder mit anderweitig speziell ausgebildeten Filmkameras aufgezeichnet, die beispielsweise in der deutschen Patentanmeldung 19944291.6 des Anmelders der vorliegenden Anmeldung beschrieben und nicht Gegenstand der vorliegenden Anmeldung sind.

Die vorliegende Erfindung betrifft dagegen die Situation, daß bereits aufgezeichnetes, zur zweidimensionalen Wahrnehmung vorgesehenes Filmmaterial vorliegt. Beispielsweise existiert das Bedürfnis, historische Filme - ähnlich einer Nachkolorierung von alten Schwarz/Weiß-Filmen - nachträglich derart zu bearbeiten, daß sie sich unter dreidimensionaler Tiefenwirkung betrachtenlassen. Als Filme sind im Zusammenhang mit der Erfindung insbesondere Fernsehsendungen, Sportaufzeichnungen, Spielfilme, Archivaufnahmen sowie auf Videoband oder auf einem Digital- oder Magnetspeichermedium aufgezeichnete Filme zu verstehen, und zwar jeweils in vollständiger Form oder als Teile hiervon.

Es ist also eine Aufgabe der Erfindung, ein Verfahren zu schaffen, das die nachträgliche Erzeugung einer 3D-Filmsequenz aus ursprünglich zur zweidimensionalen Wahrnehmung vorgesehenem Filmmaterial ermöglicht. Insbesondere soll, falls es sich um farbiges Filmmaterial handelt, die 3D-Filmsequenz auch nach ihrer Erzeugung noch in Farbe dreidimensional wahrgenommen werden können.

Diese Aufgabe wird für ein Verfahren der eingangs genannten Art dadurch gelöst, daß unter Ausbildung eines Referenzrandbereichs die Bildgröße zumindest eines Ausschnitts des Films verkleinert wird, und daß der Filmausschnitt an dem Referenzrandbereich mit einem Referenzobjekt versehen wird, das bezüglich eines in dem Filmausschnitt gezeigten Referenzobjekts eine Relativbewegung parallel zu einer im wesentlichen horizontalen Vorzugsrichtung vollzieht.

Eine weitere Lösung der Aufgabe der Erfindung besteht für das eingangs genannte Verfahren darin, daß aus einem Ausschnitt des Films wenigstens ein Referenzobjekt ausgeschnitten wird, und daß das ausgeschnittene Referenzobjekt in ein Hintergrundmotiv oder Vordergrundmotiv eingesetzt wird, das wenigstens ein Referenzobjekt aufweist, welches bezüglich des ausgeschnittenen und eingesetzten Referenzobjekts eine Relativbewegung parallel zu einer im wesentlichen horizontalen Vorzugsrichtung vollzieht.

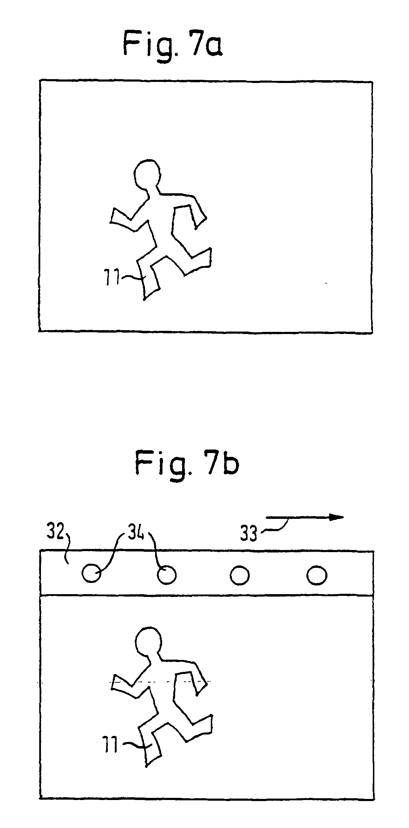

Bei diesen beiden Verfahren kann die Raumwirkung durch nachträgliche Einbindung der erforderlichen Referenzobjekte erzeugt werden (Fig. 7b bis 7d).

Gemäß einer Weiterbildung der vorstehend erläuterten Verfahren kann vorgesehen sein, daß unter Berücksichtigung vorbestimmter Auswahlkriterien Ausschnitte des Films ausgewählt werden, und daß die ausgewählten Ausschnitte zu der 3D-Filmsequenz zusammengesetzt werden, wobei als ein Mindest-Auswahlkriterium zumindest vorgesehen ist, daß die Einzelbilder eines Ausschnitts jeweils wenigstens zwei Referenzobjekte aufweisen, die jeweils in unterschiedlichen Betrachtungsebenen innerhalb eines in dem Ausschnitt dargestellten Betrachtungsraums liegen und die innerhalb des Ausschnitts eine Relativbewegung zueinander parallel zu einer im wesentlichen horizontalen Vorzugsrichtung vollziehen.

Bei diesem Verfahren wird also nicht der gesamte zugrundegelegte Film in die 3D-Filmsequenz umgewandelt, sondern es werden lediglich solche Ausschnitte des Films berücksichtigt, die hinsichtlich der Relativlage und -bewegung von darin dargestellten Objekten vorbestimmte Auswahlkriterien erfüllen.

Damit eine Tiefenwirkung wahrgenommen werden kann, müssen mindestens zwei Referenzobjekte identifiziert werden, die hinsichtlich ihrer Darstellung in dem ausgewählten Ausschnitt des Films in verschiedenen, senkrecht zur Betrachtungsrichtung verlaufenden Betrachtungsebenen angeordnet sind. Mit anderen Worten müssen diese Referenzobjekte hinsichtlich der üblicherweise horizontalen Betrachtungsrichtung, in welcher der Film von der Filmkamera aufgezeichnet wurde bzw. in welcher der Betrachter die dargestellte Filmszene wahrnimmt, unterschiedliche Abstände bezüglich der Filmkamera bzw. des Betrachters einnehmen.

Außerdem muß sich zumindest ein Paar der identifizierten Referenz-Objekte innerhalb des ausgewählten Filmausschnitts, also bei sukzessiver Betrachtung der aufeinander folgenden Einzelbilder des Ausschnitts, in horizontaler Richtung und senkrecht zur Betrachtungsrichtung relativ zueinander bewegen. Allerdings ist selbst bei einer Abweichung dieser Vorzugsrichtung von der Horizontalen um bis zu ± 30°, insbesondere um bis zu ± 15°, die räumliche Wahrnehmung noch möglich.

Bei den Referenzobjekten kann es sich um beliebig geformte Flächen handeln, die in irgendeinem Helligkeits- oder Farbkontrast zu ihrer Umgebung stehen. Ein Referenzobjekt ist also als identifizierbar anzusehen, wenn es von dem jeweiligen Hintergrund deutlich abgesetzt ist und bezüglich dieses Hintergrunds eine eigenständige Relativbewegung durchzuführen vermag. Beispielsweise kommen als Referenzobjekte ein strukturierter Hintergrund einerseits und eine davor angeordnete Person andererseits in Betracht.

Nur unter den genannten Mindestvoraussetzungen können die ausgewählten Ausschnitte bzw. die zusammengesetzte 3D-Filmsequenz unter Verwendung einer entsprechenden Filterbrille deutlich dreidimensional wahrgenommen werden. Diese Brille muß für die beiden Augen des Betrachters Filterbereiche unterschiedlichen Transmissionsgrades besitzen. Eine stereoskopische Wahrnehmung wird nachempfunden, indem der Betrachter der 3D-Filmsequenz die von seinen beiden Augen wahrgenommenen Bilder der dargestellten Relativbewegung der Referenzobjekte aufgrund der unterschiedlichen Wahrnehmungsintensität mit einem gewissen Zeitunterschied registriert. Dieser Zeitunterschied wird als räumlicher Versatz zwischen den den Referenzobjekten zugeordneten Betrachtungsebenen empfunden. Die weitere Ausgestaltung der für die dreidimensionale Wahrnehmung erforderlichen Brille wird nachstehend noch erläutert.

Das erfindungsgemäße Verfahren ermöglicht also durch Beachtung bestimmter Auswahlkriterien die nachträgliche Erzeugung einer räumlich wahrnehmbaren 3D-Filmsequenz aus einem ursprünglich lediglich zur zweidimensionalen Wahrnehmung aufgezeichneten Film. Die Umwandlung und die räumliche Betrachtung können nicht nur farbneutral, also ohne Verfälschung der Farben des ursprünglichen Films erfolgen. Die erzeugte 3D-Filmsequenz kann, sofern auf die räumliche Wahrnehmung verzichtet wird, ohne weiteres auch ohne die vorgesehene Brille betrachtet werden, und zwar ohne störende sichtbare Doppelbilder. Die räumliche Wahrnehmung erfolgt durch Verwendung der entsprechenden Brille.

Die Überprüfung der zu beachtenden Auswahlkriterien kann durch digital-elektronische Bildverarbeitung erfolgen. Alternativ ist auch eine Auswahl der geeigneten Filmausschnitte durch Fachpersonal möglich, das beispielsweise einen Vergleich der aufeinander folgenden Einzelbilder miteinander durchführt oder den Ausschnitt in seiner Gesamtheit auf das Vorliegen der Auswahlkriterien überprüft.

Um eine durchgehende räumliche Tiefenwirkung der 3D-Filmsequenz zu gewährleisten, werden vorzugsweise nur solche Ausschnitte des Films ausgewählt, die das erläuterte Mindest-Auswahlkriterium erfüllen.

Um hinsichtlich des umzuwandelnden Films eine möglichst hohe Ausbeute an verfügbarer 3D-Filmsequenz zu erreichen, ist es möglich, ohne Berücksichtigung zusätzlicher Auswahlkriterien zumindest alle oder genau alle diejenigen Ausschnitte des Films auszuwählen, die bereits das erläuterte Mindest-Auswahlkriterium erfüllen.

Alternativ hierzu kann bei dem Mindest-Auswahlkriterium zusätzlich vorgesehen sein, daß nicht nur zumindest ein Paar von Referenzobjekten, sondern alle der klar identifizierbaren Referenzobjekte die Relativbewegung vollziehen. Dies erhöht die Tiefenwirkung.

Außerdem kann als zusätzliches Auswahlkriterium vorgesehen sein, daß alle Relativbewegungen zwischen den Referenzobjekten bezüglich deren Anordnung entlang der Betrachtungsrichtung gleichgerichtet sind, d.h. in dieselbe Vorzugsrichtung verlaufen. Dadurch ist gewährleistet, daß bei mehreren Referenzobjekten die jeweiligen Betrachtungsebenen vom Betrachter in der richtigen Reihenfolge ihrer räumlichen Anordnung wahrgenommen werden.

Zur erhöhten Tiefenwirkung kann als ein weiteres Auswahlkriterium berücksichtigt werden, daß die Beträge der Relativbewegungen von Paaren von Referenzobjekten dem jeweiligen Abstand dieses Paars von Referenzobjekten entlang der Betrachtungsrichtung entsprechen. Bei größerem Abstand der Referenzobjekte entlang der Betrachtungsrichtung soll also auch die Relativbewegung bzw. die Relativgeschwindigkeit größer sein, und umgekehrt.

Um den erläuterten Effekt des räumlichen Sehens besonders wirkungsvoll zu erleben, sollte die Relativbewegung der Referenzobjekte zueinander nicht nur innerhalb des ausgewählten Ausschnitts des Films insgesamt, sondern bereits bei zwei aufeinander folgenden Einzelbildern des Ausschnitts stattfinden. Dadurch ist eine vergleichsweise hohe Frequenz der Lageänderung der Referenzobjekte gewährleistet. Vorzugsweise folgen die Einzelbilder in einem zeitlichen Abstand von höchstens 1/24 sec aufeinander, entsprechend dem Standard von Kinofilmen.

Alternativ kann als zusätzliches Auswahlkriterium eine Relativbewegung der Referenzobjekte mit einer Frequenz von mindestens 25 Hz bzw. 30 Hz vorausgesetzt werden, die der Bildwechselfrequenz der üblichen Fernsehübertragungsstandards (PAL, Secam bzw. NSTC) entspricht. Noch besser wird die Tiefenwirkung, wenn bereits zwischen zwei aufeinander folgenden Halbbildern eines Videosignals eine Relativbewegung der Referenzobjekte und somit eine wahrnehmbare Änderung der Perspektive auftritt. Dies - entspricht bei den genannten Fernsehübertragungsstandards einer Frequenz von 50 Hz bzw. 60 Hz.

Bei dem umzuwandelnden Film kann es sich vollständig oder teilweise um die Aufzeichnung einer Hochgeschwindigkeitskamera handeln, also einer Kamera, welche die aufeinander folgenden Einzelbilder gegenüber einer üblichen Filmkamera mit einer höheren Frequenz als die übliche Halbbildwechselfrequenz von 50 Hz bzw. 60 Hz eines Videosignals aufzeichnet, insbesondere mit einer um einen Faktor zwei oder drei höheren Frequenz.

In diesem Fall können auch Filme mit vergleichsweise hohen Relativgeschwindigkeiten der Referenzobjekte noch ausreichend scharf und somit mit der erwünschten Tiefenwirkung wiedergegeben werden.

Selbstverständlich ist die Erfindung auch für die Anwendung auf Filme bzw. für die Erzeugung von 3D-Filmsequenzen geeignet, die für hochauflösendes Fernsehen (high definition television) vorgesehen sind und dementsprechend mehr als die üblichen 625 Bildzeilen besitzen.

Bei allen Ausführungsformen der Erfindung ist die Richtung der jeweiligen Relativbewegung der Referenzobjekte zueinander wichtig für die korrekte Wahrnehmung der Raumtiefe. Die genannte Vorzugsrichtung dieser Relativbewegungen ist umgekehrt von der Anordnung der Filterbereiche an der für die Betrachtung der 3D-Filmsequenz vorgesehenen Brille abhängig. Falls diese Anordnung der Filterbereiche bezüglich der Augen des Betrachters aufgrund einer vorgegebenen Brille festliegt, ist auch die genannte Vorzugsrichtung der Relativbewegungen definiert. In diesem Fall können also im Prinzip lediglich solche Ausschnitte des Films für die 3D-Filmsequenz ausgewählt werden, für welche die Referenzobjekte eine Relativbewegung entlang der definierten Vorzugsrichtung vollziehen.

Um jedoch auch Filmausschnitte berücksichtigen zu können, bei denen die Relativbewegungen der Referenzobjekte in einer bezüglich der definierten Vorzugsrichtung entgegengerichteten Richtung verlaufen, können die Einzelbilder dieses Ausschnitts bezüglich einer vertikalen Spiegelachse gespiegelt werden (sogenanntes "Flippen"). Dadurch wird die Ausrichtung einer horizontalen Relativbewegung von Referenzobjekten um 180° gekippt, so daß diese Ausrichtung einer vorgegebenen Vorzugsrichtung angepaßt werden kann. Dieses Spiegeln läßt sich beispielsweise durch digitale Bildverarbeitung eines als digitales Videosignal vorliegenden Films bewerkstelligen.

Wie erläutert, erfordert die dreidimensionale Wahrnehmung einer erfindungsgemäß zusammengesetzten Filmsequenz die Verwendung einer Brille, die zwei den beiden Augen eines Benutzers zugeordnete, zumindest hinsichtlich ihres Transmissionsgrades unterschiedliche Filterbereiche sowie zwei seitliche Bügel aufweist. Der Unterschied der beiden Filterbereiche hinsichtlich ihres Transmissiongrades führt, sofern er ausreichend stark ist, zu einer zeitlich verzögerten Wahrnehmung einer beobachteten Relativbewegung von Referenzobjekten mit den beiden Augen des Benutzers und somit zu der erwünschten Tiefenwirkung. Die Anordnung der Filterbereiche an dem linken und dem rechten Auge des Benutzers geben die Vorzugsrichtung der Relativbewegung der Referenzobjekte vor.

Weitere Ausführungsformen der Erfindung sind in den Unteransprüchen genannt. Die Erfindung wird nachfolgend beispielhaft unter Bezugnahme auf die Zeichnungen beschrieben; in diesen zeigen:
- Fig. 1a, 1b, 2a, 2b, 3a und 3b: eine Abfolge von drei Einzelbildern, jeweils mit einer Draufsicht auf den dargestellten Betrachtungsraum,
- Fig. 4a, 4b, 5a, 5b, 6a und 6b: eine weitere Abfolge von drei Einzelbildern, jeweils mit einer Draufsicht auf den Betrachtungsraum,
- Fig. 7a: ein Einzelbild eines Filmausschnitts, der das Mindest-Auswahlkriterium nicht erfüllt,
- Fig. 7b bis 7d: erfindungsgemäß überarbeitete Versionen dieses Einzelbilds,
- Fig. 8a und 8b: eine Brille mit nach hinten bzw. nach vorne geklappten Bügeln,
- Fig. 9 und 10: jeweils eine in zwei zueinander verdrehten Positionen verwendbare Brille.

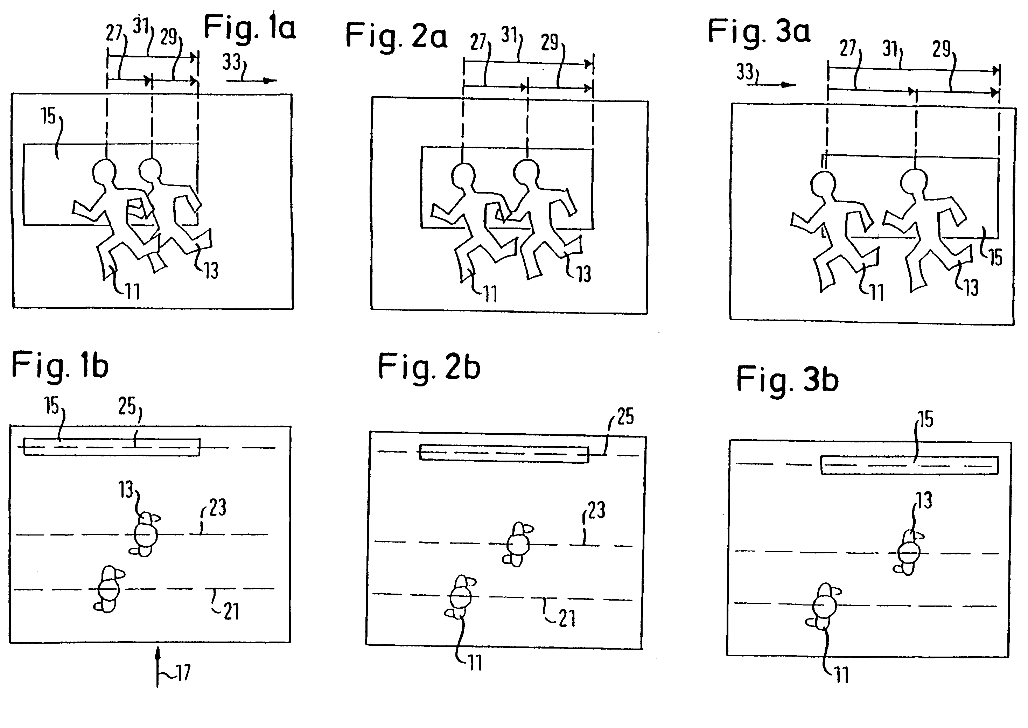

Fig. 1a, 2a und 3a zeigen schematisch einen Ausschnitt eines Films in Form von drei aufeinander folgenden Einzelbildern, der mit einer herkömmlichen Filmkamera aufgezeichnet wurde. In diesen Einzelbildern sind ein erster Läufer 11, ein zweiter Läufer 13 sowie eine Bande 15 gezeigt. Bei den beiden Läufern 11, 13 kann es sich beispielsweise um Wettkämpfer eines 100m-Laufs oder um zwei Fußballspieler handeln.

Für die Aufzeichnung der drei Einzelbilder wurde die Filmkamera derart geführt oder verschwenkt, daß der sich bewegende erste Läufer 11 innerhalb der Einzelbilder eine im wesentlichen stationäre Position einnimmt. Der zweite Läufer 13 und die Bande 15 nehmen in den drei Einzelbildern gemäß Fig. 1a, 2a und 3a dagegen variable Positionen ein.

Fig. 1b, 2b und 3b zeigen den in den Einzelbildern gemäß Fig. 1a, 2a bzw. 3a jeweils dargestellten Betrachtungsraum in einer Draufsicht. Dementsprechend besitzt die horizontale Betrachtungsrichtung, entlang der die Einzelbilder gemäß Fig. 1a, 2a und 3a aufgezeichnet wurden und betrachtet werden können, in den Draufsichten einen vertikalen Verlauf 17 (vgl. Fig. 1b). Die gezeigten Draufsichten dienen lediglich zur Veranschaulichung der Lage der Läufer 11, 13 und der Bande 15 relativ zueinander; sie sind nicht Teil der Aufzeichnung der Filmkamera.

Wie aus den Einzelbildern und den entsprechenden Draufsichten ersichtlich, befindet sich der erste Läufer 11 bezüglich der Betrachtungsrichtung 17 der Einzelbilder vor dem zweiten Läufer 13, der wiederum stets vor der Bande 15 angeordnet ist. Dem ersten Läufer 11, dem zweiten Läufer 13 und der Bande 15 können somit eigene, jeweils senkrecht zur Betrachtungsrichtung 17 und beabstandet voneinander verlaufende Betrachtungsebenen 21, 23 bzw. 25 zugeordnet werden (Fig. 1b, 2b und 3).

Um zu entscheiden, ob der durch die drei Einzelbilder gebildete Filmausschnitt für eine 3D-Filmsequenz verwendet werden soll, ist zumindest das folgende Mindest-Auswahlkriterium zu prüfen:
- Die Einzelbilder müssen mindestens zwei bezüglich ihrer Umgebung deutlich abgesetzte Referenzobjekte zeigen. In dem gezeigten Beispiel stellen die beiden Läufer 11, 13 und die Bande 15 jeweils ein eigenes Referenzobjekt dar.
- Die Referenzobjekte müssen in unterschiedlichen Betrachtungsebenen 21, 23, 25 liegen. Diese Voraussetzung ist ebenfalls erfüllt.
- Außerdem müssen die Referenzobjekte bezüglich der Abfolge der Einzelbilder eine Relativbewegung zueinander parallel zu einer horizontalen Vorzugsrichtung vollziehen.
   In den Fig. 1a, 2a und 3a ist jeweils der seitliche Abstand von einem vorderen Referenzobjekt 11, 13 zu einem hinteren Referenzobjekt 13, 15 gezeigt, also der seitliche Abstand 27 vom ersten Läufer 11 zum zweiten Läufer 13, der seitliche Abstand 29 vom zweiten Läufer 13 zur Bande 15 und der seitliche Abstand 31 vom ersten Läufer 11 zur Bande 15. Da sich diese drei Abstände 27, 29, 31 von Einzelbild zu Einzelbild stets ändern, ist das Kriterium der horizontalen Relativbewegung hier sogar für alle drei möglichen Paare von Referenzobjekten 11, 13, 15 erfüllt.

Somit ist der Filmausschnitt gemäß Fig. 1a, 2a und 3a grundsätzlich für das Zusammensetzen einer 3D-Filmsequenz geeignet. Außerdem sind unter anderem folgende weitere Auswahlkriterien erfüllt:
- Die Relativbewegungen der Referenzobjekte 11, 13, 15, also die Änderungen der seitlichen Abstände 27, 39, 31 von Einzelbild zu Einzelbild, erfolgen allesamt in dieselbe horizontale Vorzugsrichtung 33 (Fig. 1a) und sind somit gleichgerichtet.
- Außerdem unterstützen auch die Absolutbeträge dieser Relativbewegungen die erwünschte Tiefenwirkung. Beispielsweise ist die betragsmäßige Änderung des seitlichen Abstands 31 zwischen dem ersten Läufer 11 und der Bande 15 größer als die betragsmäßige Änderung des seitlichen Abstands 27 zwischen dem ersten Läufer 11 und dem zweiten Läufer 13. Diese Betragsunterschiede entsprechen einem größeren Abstand in Betrachtungsrichtung 17 zwischen den Betrachtungsebenen 21 und 25 als zwischen den Betrachtungsebenen 21 und 23.

Somit kann der Filmausschnitt gemäß Fig. 1a, 2a und 3a unter Verwendung einer entsprechenden Brille mit besonders deutlicher Tiefenwirkung beobachtet werden.

Ergänzend ist noch zu bemerken, daß das Mindest-Auswahlkriterium auch erfüllt wäre, wenn der zweite Läufer 13 in den Einzelbildern gemäß Fig. 1a, 2a und 3a nicht gezeigt wäre. In diesem Fall würden der erste Läufer 11 und die Bande 15 jeweils eines der beiden erforderlichen Referenzobjekte bilden.

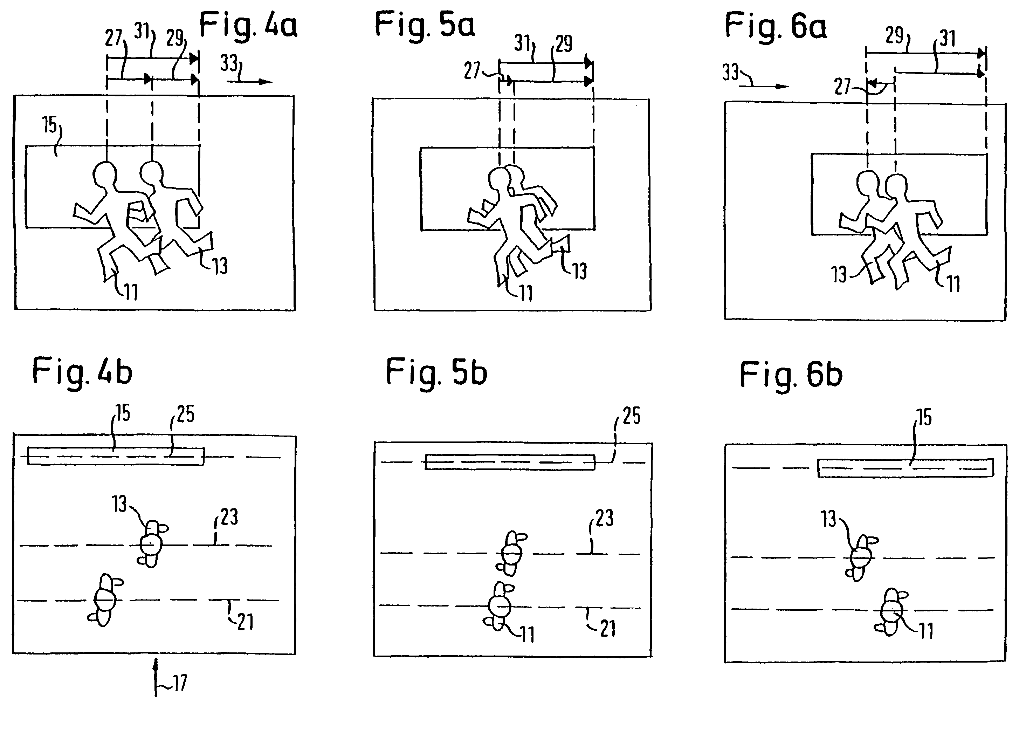

Fig. 4a, 5a und 6a zeigen eine den Einzelbildern gemäß Fig. 1a, 2a und 3a entsprechende Abfolge von Einzelbildern, die auf ihre Eignung für das Zusammensetzen einer 3D-Filmsequenz überprüft werden sollen. Fig. 4b, 5b und 6b zeigen Draufsichten auf den in diesen Einzelbildern jeweils dargestellten Betrachtungsraum. Gleiche Objekte, Richtungen oder Abstände wie in den Fig. 1a bis 3b sind in den Fig. 4a bis 6b mit denselben Bezugszeichen gekennzeichnet.

Im Unterschied zu den Einzelbildern gemäß Fig. 1a, 2a und 3a war die Filmkamera bei der Aufzeichnung der Einzelbilder gemäß Fig. 4a, 5a und 6a auf den zweiten Läufer 13 gerichtet, d.h. der zweite Läufer 13 befindet sich innerhalb der Einzelbilder im wesentlichen stets an derselben Position. Außerdem überholt bei diesem Beispiel der zweite Läufer 13 den ersten Läufer 11 (vgl. Fig. 4b, 5b und 6b).

Aufgrund dieser Änderungen erfolgt zwischen dem ersten Läufer 11 und der Bande 15 praktisch keine Relativbewegung, d.h. der seitliche Abstand 31 bleibt in den Einzelbildern gemäß Fig. 4a, 5a und 6a konstant. Somit ist das Mindest-Auswahlkriterium hinsichtlich der horizontalen Relativbewegung lediglich für die Relativbewegung zwischen dem ersten Läufer 11 und dem zweiten Läufer 13 sowie für die Relativbewegung zwischen dem zweiten Läufer 13 und der Bande 15 erfüllt.

Außerdem sind diese beiden Relativbewegungen nicht gleichgerichtet: Während die Änderung des seitlichen Abstands 29 zwischen dem zweiten Läufer 13 und der Bande 15 bezüglich der Darstellung gemäß Fig. 4a, 5a und 6a in der horizontalen Vorzugsrichtung 33 nach rechts verläuft, nimmt der seitliche Abstand 27 zwischen dem ersten Läufer 11 und dem zweiten Läufer 13 ab und ändert sein Vorzeichen, so daß die Änderung des seitlichen Abstands 27 bezüglich der Darstellung gemäß Fig. 4a, 5a und 6a entgegen der horizontalen Vorzugsrichtung 33 nach links verläuft.

Daher ist die Abfolge der Einzelbilder gemäß Fig. 4a, 5a und 6a - trotz Erfüllung des Mindest-Auswahlkriteriums - weniger geeignet für eine dreidimensionale Wahrnehmung als die Abfolge der Einzelbilder gemäß Fig. 1a, 2a und 3a.

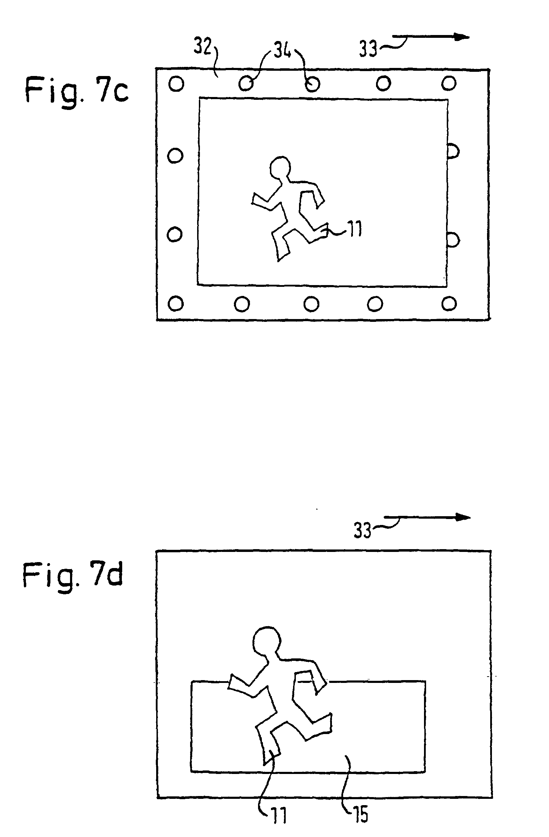

Fig. 7a zeigt ein Einzelbild eines Filmausschnitts, in dem als einziges Referenzobjekt ein Läufer 11 dargestellt ist. Aufgrund entsprechender Kameraführung bewegt sich der Läufer 11 nicht in horizontaler Richtung. Außerdem ist kein deutlich abgesetzter Hintergrund erkennbar. Dieser Filmausschnitt erfüllt also mangels eines zweiten Referenzobjekts nicht das erläuterte Mindest-Auswahlkriterium. Falls der Filmausschnitt dennoch für das Zusammensetzen der 3D-Filmsequenz verwendet werden soll, bestehen insbesondere folgende Möglichkeiten:
1. Den Einzelbildern des Filmausschnitts wird ein Referenzrandbereich 32 überlagert, wie in Fig. 7b beispielsweise für den oberen Bildrand gezeigt. Die Einzelbilder werden also - zum Beispiel auf digital-elektronische Weise - bereichsweise abgeschnitten und mit dem Referenzrandbereich 32 versehen, was einer Verringerung der sichtbaren Bildgröße der Einzelbilder entspricht. Der Referenzrandbereich 32 enthält wenigstens ein weiteres Referenzobjekt, das in dem dargestellten Beispiel durch mehrere gleichartige graphische Symbole 34 gebildet ist, bei denen es sich beispielsweise um das Logo des Anbieters der 3D-Filmsequenz handeln kann. Das weitere Referenzobjekt bzw. die Symbole 34 bewegen sich gleichförmig in der horizontalen Vorzugsrichtung 33 und somit relativ zu dem Läufer 11. Dadurch wird die erwünschte Tiefenwirkung ermöglicht.
2. Die Einzelbilder des Filmausschnitts werden komprimiert und an den dabei entstehenden leeren Randflächen mit einem Referenzrandbereich ausgefüllt. Fig. 7c zeigt das sowohl entlang einer vertikalen als auch entlang einer horizontalen Richtung gleichmäßig komprimierte Einzelbild gemäß Fig. 7a, und zwar mit einem umlaufenden Referenzrandbereich 32. In diesem sind wiederum ein oder mehrere weitere Referenzobjekte 34 gezeigt, die sich relativ zu dem Läufer 11 in der Vorzugsrichtung 33 bewegen.
3. Alternativ kann der Läufer 11 aus dem Einzelbild gemäß Fig. 7a insbesondere auf digital-elektronische Weise ausgeschnitten werden und vor einen völlig neuen Hintergrund eingeblendet werden. Das Ergebnis dieser Vorgehensweise ist in Fig. 7d gezeigt. Der Läufer 11 befindet sich nun vor einer Bande 15, die zuvor ohne weitere Objekte im Vordergrund gefilmt wurde und die sich innerhalb der auf diese Weise gebildeten Filmsequenz in der horizontalen Vorzugsrichtung 33 bewegt. Der Läufer 11 und die Bande 15 stellen also Referenzobjekte dar, die sich relativ zueinander bewegen. Somit kann die gebildete Filmsequenz unter Verwendung der vorgesehenen Brille dreidimensional wahrgenommen werden.

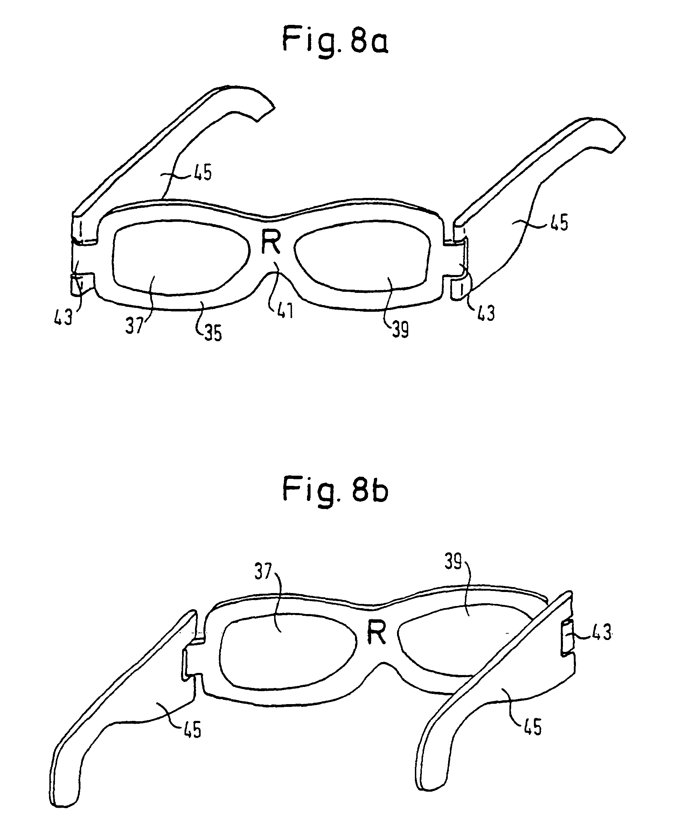

Fig. 8a und 8b zeigen eine Brille, mit der die Tiefenwirkung einer gemäß den vorstehend erläuterten Auswahlkriterien zusammengesetzten 3D-Filmsequenz wahrgenommen werden kann, und zwar wahlweise für zwei einander entgegengerichtete horizontale Vorzugsrichtungen der Relativbewegung der räumlich wahrzunehmenden Objekte.

Die Brille besitzt einen Rahmen 35 mit zwei Filterbereichen 37, 39 und einem dazwischen liegenden Nasensteg 41. An den beiden Seitenrändern des Rahmens 35 ist jeweils über ein Scharnier 43 ein Bügel 45 angelenkt.

Die beiden Filterbereiche 37, 39 besitzen unterschiedliche Transmissionsgrade. Dieser Unterschied des jeweiligen Transmissionsgrades ist so gewählt, daß die Wahrnehmung einer Relativbewegung von Referenzobjekten seitens des Beobachters mit einer Zeitverzögerung zwischen 1/24 sec und 1/60 sec hinsichtlich seiner beiden Augen erfolgt. Durch die Brille sind, je nachdem ob beispielsweise der Filterbereich 37 an dem linken oder dem rechten Auge des Benutzers angeordnet ist, zwei verschiedene horizontale Vorzugsrichtungen vorgegeben.

Damit 3D-Filmsquenzen jeder beliebigen horizontalen Vorzugsrichtung betrachtet werden können, sind die Bügel 45 nicht nur wie bei herkömmlichen Brillen um jeweils 90° aufklappbar, sondern zusätzlich um wenigstens 180° umklappbar. Somit kann durch Umklappen der Bügel 45 letztlich die Anordnung der beiden Filterbereiche 37, 39 relativ zu den Augen des Benutzers der Brille aus Kunststoff vertauscht werden, wie in den Fig. 8a und 8b dargestellt. Außerdem ist zu diesem Zweck der Rahmen 35 innerhalb seiner Erstreckungsebene flach, also ohne Wölbung ausgebildet. Ferner ist an den beiden Seiten des Rahmens 35 am Nasensteg 41 jeweils eine Markierung der gewählten Vorzugsrichtung angebracht, beispielsweise in Form des Buchstabens "R" für "rechts" und - in den Fig. 8a und 8b nicht sichtbar - "L" für "links".

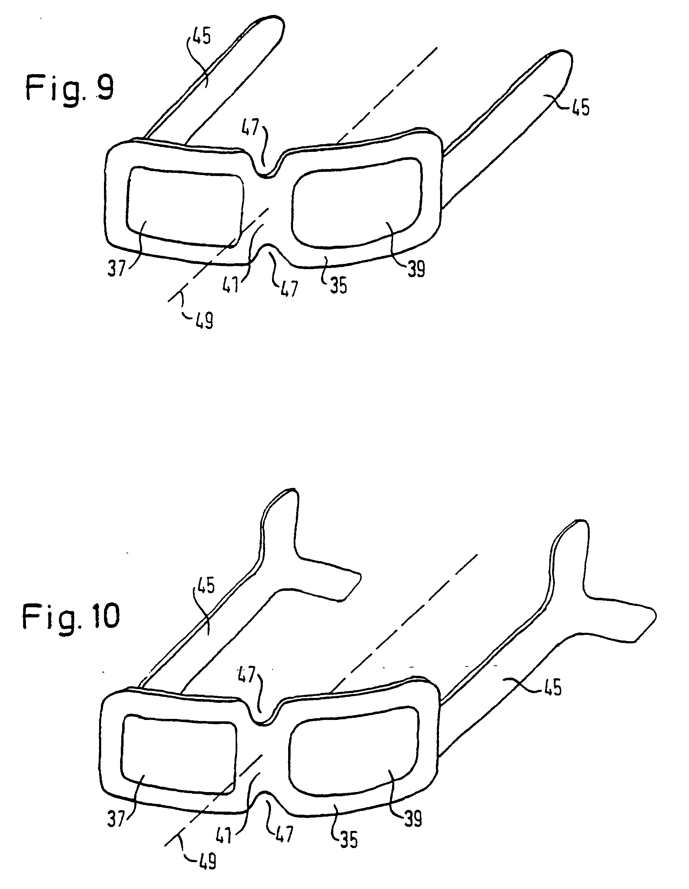

Fig. 9 und 10 zeigen kein Ausführungsbeispiel der Erfindung. Dargestellt ist jeweils eine weitere Brille mit Rahmen 35, unterschiedlichen Filterbereichen37, 39 sowie mit Bügeln 45, die ein Vertauschen der gewählten Vorzugsrichtung ermöglicht. Hierfür ist sowohl an der Unterkante als auch an der Oberkante des Rahmens 35 jeweils eine Nasenaussparung 47 vorgesehen. Durch Drehung der Brille um ihre Mittensymmetrieachse 49 um 180° wird die Anordnung der Filterbereiche 37, 39 relativ zu den Augen des Benutzers vertauscht.

Die Enden der Bügel 45 sind bezüglich dieser 180°-Drehung symmetrisch ausgebildet. Bei der Brille gemäß Fig. 9 verlaufen die Bügel 45 geradlinig mit abgerundeten Enden. In Fig. 10 sind die Enden der Bügel 45 in symmetrischer Weise, d.h. nach unten und nach oben abgewinkelt.

Die Brillen gemäß Fig. 8a, 8b, 9 und 10 können aus Kunststoff gefertigt sein. Bei einer Ausbildung aus Pappe oder Papier genügt zur Ermöglichung des Auf- bzw. Umklappens der Bügel 45 jeweils ein Falz.

### Bezugszeichenliste

- 11: erster Läufer
- 13: zweiter Läufer
- 15: Bande
- 17: Betrachtungsrichtung
- 21: Betrachtungsebene
- 23: Betrachtungsebene
- 25: Betrachtungsebene
- 27: seitlicher Abstand
- 29: seitlicher Abstand
- 31: seitlicher Abstand
- 32: Referenzrandbereich
- 33: horizontale Vorzugsrichtung
- 34: graphisches Symbol
- 35: Rahmen
- 37: Filterbereich
- 39: Filterbereich
- 41: Nasensteg
- 43: Scharnier
- 45: Bügel
- 47: Nasenaussparung
- 49: Mittensymmetrieachse

## Patentansprüche

1. Verfahren zur Erzeugung einer dreidimensional wahrnehmbaren Filmsequenz (3D-Filmsequenz) aus einem Film, der aus mehreren unmittelbar aufeinander folgenden Einzelbildern besteht und zur zweidimensionalen Wahrnehmung vorgesehen ist,
**dadurch gekennzeichnet,**
**daß** unter Ausbildung eines Referenzrandbereichs (32) die Bildgröße zumindest eines Ausschnitts des Films verkleinert wird, und
**daß** der Filmausschnitt an dem Referenzrandbereich (32) mit einem Referenzobjekt (34) versehen wird, das bezüglich eines in dem Filmausschnitt gezeigten Referenzobjekts (11) eine Relativbewegung parallel zu einer im wesentlichen horizontalen Vorzugsrichtung (33) vollzieht.

2. Verfahren nach Anspruch 1,
**dadurch gekennzeichnet,**
**daß** die Bildgröße des Filmausschnitts verkleinert wird, indem der Filmausschnitt in einer oder in zwei Richtungen komprimiert wird.

3. Verfahren nach einem der vorhergehenden Ansprüche,
**dadurch gekennzeichnet,**
**daß** die Bildgröße des Filmausschnitts verkleinert wird, indem ein dem Referenzrandbereich (32) entsprechender Teil des Filmausschnitts ausgeschnitten oder ausgeblendet wird.

## Claims

1. A method of producing a film sequence (3D film sequence), which can be perceived three-dimensionally, from a film which consists of a plurality of directly sequential individual images and which is intended for two-dimensional perception,
**characterised**
**in that** the image size of at least one section of the film is reduced in size while forming a marginal reference zone; and
**in that** the film section is provided at the marginal reference zone (32) with a reference object (34) which carries out a relative movement parallel to an essentially horizontal preferential direction (33) with respect to a reference object (11) shown in the film section.

2. A method in accordance with claim 1, **characterized in that** the image size of the film section is reduced in size **in that** the film section is compressed in one direction or in two directions.

3. A method in accordance with any one of the preceding claims, **characterized in that** the image size of the film section is reduced in size **in that** a part of the film section corresponding to the marginal reference zone (32) is cut out or faded out.

## Revendications

1. Procédé pour engendrer une séquence de film susceptible d'être perçue comme tridimensionnelle (séquence de film 3D) à partir d'un film qui est constitué de plusieurs images individuelles qui se suivent directement les unes les autres, et qui est prévu pour une perception bidimensionnelle,
**caractérisé en ce que** :
en formant une zone de bordure de référence (32), la taille des images d'au moins un tronçon du film est réduite, et **en ce que** le tronçon de film est pourvu, au niveau de la zone de bordure de référence (32), d'un objet de référence (34) qui exécute, par rapport à l'objet de référence (11) montré dans le tronçon de film, un mouvement relatif parallèlement à une direction préférentielle (33) sensiblement horizontale.

2. Procédé selon la revendication 1,
**caractérisé en ce que** :
la taille des images du tronçon de film est réduite en comprimant le tronçon de film dans une ou dans deux directions.

3. Procédé selon l'une des revendications précédentes,
**caractérisé en ce que** :
la taille des images du tronçon de film est réduite en découpant ou en masquant une partie du tronçon de film qui correspond à la zone de bordure de référence (32).
